# EUROPÄISCHE PATENTANMELDUNG

(11) **EP 3 961 170 A1**
(43) Veröffentlichungstag der Anmeldung: **02.03.2022**
(21) Anmeldenummer: 20193018.7
(22) Anmeldetag: 27.08.2020
(51) Int. Cl.: G01K 7/16, G01K 7/18, H01C 7/10

(54) **TEMPERATURSENSOR UND VERFAHREN ZUR HERSTELLUNG EINES DERARTIGEN TEMPERATURSENSORS**

(71) Anmelder: Heraeus Nexensos GmbH, 63801 Kleinostheim (DE)
(72) Erfinder: WIENAND, Karlheinz, 63801 Kleinostheim (DE); ASMUS, Tim, 63801 Kleinostheim (DE); NICK, Christoph, 63801 Kleinostheim (DE)
(74) Vertreter: Kilchert, Jochen

(57) **Zusammenfassung**

Die Erfindung betrifft einen Temperatursensor (10), umfassend:
- ein Substrat (15), gebildet aus einem Metallelement, insbesondere einer Metallfolie, wobei das Substrat (15) eine Vorderseite (16) und eine Rückseite (17) aufweist,
- eine Isolationsschicht (20), die die Vorderseite (16) des Substrats (15) lediglich abschnittsweise bedeckt, derart, dass ein isolationsschichtfreier Abschnitt (25) auf der Vorderseite (16) des Substrats (15) gebildet ist, und
- eine Sensorstruktur (30), insbesondere eine resistive Sensorstruktur, die auf der Isolationsschicht (20) und auf dem isolationsschichtfreien Abschnitt (25) der Vorderseite (16) des Substrats (15) ausgebildet ist,
wobei die Sensorstruktur (30) mindestens zwei elektrische Kontaktierungsabschnitte (31, 32) aufweist, und ein erster Kontaktierungsabschnitt (31) mit dem isolationsschichtfreien Abschnitt (25) der Vorderseite (16) des Substrats (15) verbunden ist und ein zweiter Kontaktierungsabschnitt (32) ein erstes Kontaktpad (41) ist oder mit einem ersten Kontaktpad (41) verbunden ist, wobei das erste Kontaktpad (41) vorzugsweise auf der Isolationsschicht (20) angeordnet ist.

## Beschreibung

Die Erfindung betrifft einen Temperatursensor sowie ein Verfahren zur Herstellung eines derartigen Temperatursensors.

Aus dem Stand der Technik ist es bekannt, Temperatursensoren möglichst klein bzw. miniaturisiert auszubilden. In EP 1 692 476 B1 wird beispielsweise ein Temperatursensor auf Basis eines Platin-Dünnschichtsensors vorgeschlagen. Die Kontaktflächen des Dünnschichtsensors sind auf gegenüberliegenden Seiten eines Substrates angeordnet. Die Kontaktierung der Sensorstruktur erfolgt dabei mit Hilfe einer sogenannten Durchführung, die ein erstes Kontaktpad der Oberseite mit der Metallisierung auf der Unterseite des Substrates elektrisch verbindet. Allerdings ist die Herstellung eines derartigen Sensors relativ aufwändig. In ein isolierendes Substrat ist eine Durchführung einzubringen, wobei diese Durchführung mit einem elektrisch leitfähigen Material gefüllt werden muss.

In US 6 151 771 A wird hingegen ein SMD-Temperatursensor auf Basis einer Platin-Dünnschichtstruktur offenbart. Die Kontakte werden dabei von einer Oberseite auf eine Unterseite des Substrates geführt, indem zwei Seitenflächen des Substrates metallisiert werden. Um eine sichere elektrische Verbindung zwischen den beiden Kontaktabschnitten auf der Ober- und Unterseite des Substrates zu gewährleisten, werden zusätzliche Lötverbindungen ausgebildet, die die Seitenflächen umschließen. Nachteilig an einer derartigen Ausbildung eines Temperatursensors ist wiederum die Komplexität der Herstellung. Die beschriebenen Seitenflächen müssen in einem dafür notwendigen Arbeitsschritt metallisiert werden. Des Weiteren ist das Ausbilden eines zusätzlichen Lötverbindung notwendig, um die Verbindung zwischen den beiden Kontaktabschnitten zu ermöglichen.

Es ist des Weiteren bekannt, kleine Temperatursensoren in Form von NTCs zu realisieren. Hierzu wird ein Halbleitermaterial in Form eines Quaders zur Verfügung gestellt und an zwei einander gegenüberliegenden Seitenflächen metallisiert. Die metallisierten Seitenflächen dienen wiederum als Kontakte für die elektrischen Zuleitungen. Diese Bauform erlaubt zwar kleine Baugrößen eines Temperatursensors, allerdings haben derartige Temperatursensoren den Nachteil, einer nur eingeschränkten Genauigkeit.

Ausgehend von dem Vorgenannten, ist es Aufgabe der vorliegenden Erfindung, einen derartigen Temperatursensor zur Verfügung zu stellen, der zum einen kleine Abmaße aufweisen kann, zum anderen eine hohe Messgenauigkeit aufweist und des Weiteren einfach herzustellen ist.

Eine weitere Aufgabe der Erfindung besteht darin, ein entsprechendes Verfahren zur Herstellung eines erfindungsgemäßen Temperatursensors anzugeben.

Erfindungsgemäß wird diese Aufgabe im Hinblick auf einen Temperatursensor durch den Gegenstand des Anspruches 1 und im Hinblick auf ein Verfahren zur Herstellung eines Temperatursensors durch den Gegenstand des Patentanspruches 11 gelöst.

Die Erfindung beruht auf dem Gedanken, einen Temperatursensor anzugeben, der umfasst:
- ein Substrat, gebildet aus einem Metallelement, insbesondere einer Metallfolie, wobei das Substrat eine Vorderseite und eine Rückseite aufweist,
- eine Isolationsschicht, die die Vorderseite des Substrats lediglich abschnittsweise bedeckt, derart, dass ein isolationsschichtfreier Abschnitt auf der Vorderseite des Substrats gebildet ist, und
- eine Sensorstruktur, insbesondere eine resistive Sensorstruktur, die auf der Isolationsschicht und auf dem isolationsschichtfreien Abschnitt der Vorderseite des Substrats ausgebildet ist,
wobei die Sensorstruktur mindestens zwei elektrische Kontaktierungsabschnitte aufweist, und ein erster Kontaktierungsabschnitt mit dem isolationsschichtfreien Abschnitt der Vorderseite des Substrats verbunden ist und ein zweiter Kontaktierungsabschnitt ein erstes Kontaktpad ist oder mit einem ersten Kontaktpad verbunden ist, wobei das erste Kontaktpad vorzugsweise auf der Isolationsschicht angeordnet ist.

Mit anderen Worten wird ein Temperatursensor angegeben, der ein Substrat, eine Isolationsschicht sowie eine Sensorstruktur aufweist, wobei die Isolationsschicht nicht vollflächig auf einer Vorderseite des Substrates aufgetragen und/oder aufgebracht ist. Auf dem Substrat wird ein isolationsschichtfreier Abschnitt gebildet. Die Sensorstruktur ist wiederum zumindest abschnittsweise auf diesem isolationsschichtfreien Abschnitt ausgebildet.

Die Sensorstruktur ist derart auf dem isolationsschichtfreien Abschnitt ausgebildet, dass mindestens ein Kontaktierungsabschnitt der Sensorstruktur mit dem isolationsschichtfreien Abschnitt der Vorderseite des Substrates verbunden, insbesondere elektrisch verbunden, ist. Die zu Grunde liegende Aufgabe wird somit erfindungsgemäß dadurch gelöst, dass eine Sensorstruktur auf einem Substrat aufgebracht werden kann, das relativ kleine Abmaße aufweisen kann, wobei die elektrische Kontaktierung auf der Isolationsschicht durch Verbindung mit einem Kontaktpad und andererseits durch Kontaktierung des Substrates aufgrund der Ausbildung der Sensorstruktur auf dem isolationsschichtfreien Abschnitt erfolgt.

Das erste Kontaktpad kann direkt oder indirekt auf der Isolationsschicht angeordnet oder mit der Isolationsschicht verbunden sein. Es ist möglich, dass das erste Kontaktpad indirekt über den zweiten Kontaktierungsabschnitt mit der Isolationsschicht verbunden ist.

Die Vorderseite und die Rückseite eines Substrates sind zwei gegenüberliegende Seiten des Substrates. Dabei handelt es sich um die flächenmäßig größeren gegenüberliegenden Seiten des Substrates. Als Vorderseite und Rückseite eines Substrates sind vorzugsweise nicht die Seiten des Substrates zu verstehen, die durch die Schichtdicke bzw. Bauteildicke des Substrates gebildet werden. Sofern sowohl die Vorderseite als auch die Rückseite aus gleichem Material bestehen bzw. eine gleiche Beschichtung aufweisen, können beide Seiten als Vorderseite und/oder Rückseite fungieren.

Bei dem Substrat handelt es sich in einer besonders bevorzugten Ausführungsform der Erfindung um ein elektrisch leitendes Substrat.

Als Vorderseite des Substrates ist vorzugsweise die Seite des Substrates zu verstehen, auf der direkt oder indirekt eine Isolationsschicht ausgebildet wird. Die Isolationsschicht bedeckt das Substrat nicht vollständig bzw. unvollständig.

In einer bevorzugten Ausführungsform der Erfindung ist der isolationsschichtfreie Abschnitt an einem Randabschnitt der Vorderseite des Substrates ausgebildet. Als ein Randabschnitt ist insbesondere ein derartiger Abschnitt der Vorderseite zu verstehen, der an mindestens eine Seitenkante der Vorderseite des Substrates angrenzt. Vorzugsweise handelt es sich bei dem Randabschnitt der Vorderseite um den Randabschnitt der Vorderseite, der von einer kürzeren Seite des Substrates gebildet wird.

Zur elektrischen Kontaktierung des Temperatursensors weist dieser Zuleitungen auf. Vorzugsweise weist der Temperatursensor zwei elektrische Zuleitungen auf. Es ist möglich, dass der Temperatursensor eine erste elektrische Zuleitung aufweist, die mit der Rückseite des Substrates verbunden ist und mindestens eine zweite elektrische Zuleitung aufweist, die mit dem ersten Kontaktpad verbunden ist. Die elektrische Kontaktierung des Temperatursensors erfolgt somit einerseits auf der Rückseite des Substrates und andererseits auf der gegenüberliegenden Seite des Temperatursensors, nämlich auf dem ersten Kontaktpad. Aufgrund einer derartigen elektrischen Kontaktierung ist es möglich, einen Temperatursensor mit besonders kleinen Abmaßen zur Verfügung zu stellen. Die kleinen Abmaße werden unter anderem dadurch realisiert, indem die Kontaktierungen des Temperatursensors auf den sich gegenüberliegenden Seiten des Temperatursensors erfolgen und nicht, wie bei Sensorstrukturen üblich, nebeneinander auf einer Seite des Temperatursensors bzw. des Substrates.

In einer weiteren Ausführungsform der Erfindung kann auf der vom Substrat weg weisenden Seite der Sensorstruktur zumindest abschnittsweise eine Passivierungsschicht ausgebildet sein.

Es ist möglich, dass die Passivierungsschicht aus Glasfritten gebildet ist oder Glasfritten aufweist. Des Weiteren ist es möglich, dass beispielsweise Schichten aus Aluminiumoxid (Al₂O₃) als Passivierungsschichten ausgebildet sind.

In einer weiteren Ausführungsform der Erfindung ist die Sensorstruktur vollständig mit einer Passivierungsschicht abgedeckt. Es ist möglich, dass das erste Kontaktpad des Temperatursensors zumindest abschnittsweise von einer Passivierungsschicht abgedeckt wird.

Des Weiteren ist es möglich, dass das erste Kontaktpad derart angeordnet ist, dass dieses abschnittsweise auf der von der Sensorstruktur weg weisenden Seite der Passivierungsschicht aufliegt und gleichzeitig mit der Sensorstruktur elektrisch verbunden ist. In einer derartigen Ausführungsform der Erfindung wird eine weitere Reduzierung der Sensorfläche bewirkt. Eine solche Ausgestaltungsform wird realisiert, indem das Kontaktpad nach dem Aufbringen der Passivierungsschicht gleichzeitig auf die Passivierungsschicht und den nicht abgedeckten Bereich der Sensorstruktur aufgebracht wird, wie zum Beispiel durch Siebdruck einer edelmetallhaltigen Paste.

Das Metallelement, insbesondere die Metallfolie, aus der ein Substrat gebildet wird, weist vorzugsweise eines der folgenden Elemente auf: Aluminium (AI) und/oder Stahl, insbesondere ferritischer Stahl, und/oder Titan (Ti) und/oder Niob (Nb) und/oder Tantal (Ta) und/oder Nickel (Ni) und/oder Kupfer (Cu).

In einer besonders bevorzugten Ausführungsform ist das Metallelement, insbesondere die Metallfolie, aus einem der folgenden Elemente gebildet: Aluminium (AI) und/oder Stahl, insbesondere ferritischer Stahl, und/oder Titan (Ti) und/oder Niob (Nb) und/oder Tantal (Ta) und/oder Nickel (Ni) und/oder Kupfer (Cu).

Insbesondere ist es möglich, dass die Metallfolie vorzugsweise aus derartigen Materialien gebildet ist, die bei einer anionischen Oxidation dichte Metalloxidschichten mit einer hohen elektrischen Isolation ausbilden. Dies dient zur Herstellung einer entsprechenden Isolationsschicht.

Der Stahl, insbesondere der ferritische Stahl, ist vorzugsweise eine FeCrAl-Legierung, insbesondere X8CRAl20-5 oder FeCr25Al5.

Das Substrat weist vorzugsweise eine Substratdicke von 10 µm bis 1 mm, insbesondere von 0,02 mm bis 0,5 mm, besonders bevorzugt von 0,05 mm bis 0,3 mm, auf. Sofern das Substrat aus einer Metallfolie mit einer Substratdicke von weniger als 300 µm gebildet wird, weist das Substrat eine besonders gute mechanische Flexibilität auf.

In Abhängigkeit der Materialauswahl im Zusammenhang mit der Sensorstruktur kann eine spezielle Auswahl hinsichtlich des Materials des Substrates erfolgen. Sofern beispielsweise die Sensorstruktur aus Platin und/oder einer Platinlegierung gebildet wird, sollte der thermische Ausdehnungskoeffizient des Substrates im Bereich von 6 * 10⁻⁶ K⁻¹ bis 15 * 10⁻⁶ K⁻¹ liegen. Die Wahl des Materials des Substrates mit einem derartigen Ausdehnungskoeffizienten verhindert ein Abplatzen einer darauf aufgebrachten Sensorstruktur, die aus Platin und/oder einer Platinlegierung hergestellt ist. Sofern eine Sensorstruktur aus Platin gebildet wird, eignen sich besonders ferritische Stähle oder Titan oder Tantal hinsichtlich des Substratmaterials.

Des Weiteren ist es möglich, dass das Substrat auf mindestens einer Seite, besonders bevorzugt sowohl auf der Vorderseite als auch auf der Rückseite, besonders bevorzugt vollständig, mit einer Nickel-Schutzschicht und/oder einer Gold-Schutzschicht beschichtet wird.

Eine derartige Nickel-Schutzschicht weist vorzugsweise eine Dicke von ca. 3 µm auf. Eine Gold-Schutzschicht weist vorzugsweise eine Schichtdicke von 0,1 µm auf.

Als Isolationsschichten eignen sich insbesondere derartige elektrisch isolierende Schichten, die das elektrisch leitende Substrat von der Heizstruktur elektrisch trennen. Generell eignen sich hierzu Schichten mit einem spezifischen Widerstand von > 10E10 Ω * cm.

Die Isolationsschicht umfasst beispielsweise eine Metalloxidschicht, insbesondere eine anodisierte Metalloxidschicht, oder eine Metallnitridschicht oder eine Metalloxidnitridschicht. In einer besonders bevorzugten Ausführungsform der Erfindung ist die Isolationsschicht eine Metalloxidschicht, insbesondere eine anodisierte Metalloxidschicht, oder eine Metallnitridschicht oder eine Metalloxidnitridschicht.

Der Vorteil einer Isolationsschicht, die eine Metalloxidschicht, eine Metallnitridschicht oder eine Metalloxidnitridschicht ist oder aufweist, besteht darin, dass derartige Isolationsschichten sowohl gute isolierende Eigenschaften aufweisen als auch möglichst dünn ausgestaltet werden können.

Einige Metalle, wie zum Beispiel Aluminium oder FeCrAI-Legierungen bilden besonders stabile Metalloxidschichten aus, sodass ein Abplatzen der Isolationsschicht bzw. das Ausbilden von Rissen in der Isolationsschicht, auch bei schnellen Temperaturwechseln verhindert wird.

Des Weiteren ist es möglich, dass die Isolationsschicht folgende Bestandteile aufweist oder aus folgenden Bestandteilen besteht:
Aluminiumoxid (Al₂O₃) und/oder Aluminiumtitantat (Al₂TiO₅) und/oder Titandioxid (TiO₂) und/oder Siliziumdioxid (SiO₂) und/oder Siliziumoxid (SiO) und/oder Magnesiumoxid (MgO) und/oder Magnesiumtitanat (MgTiO₃) und/oder eine binäre Zirkondioxid-Legierung und/oder eine ternäre Zirkoniumdioxid-Legierung und/oder Bornitrid (BN) und/oder Aluminiumnitrid (AIN) und/oder Siliziumnitrid (Si₃N₄).

In einer besonders bevorzugten Ausführungsform der Erfindung wird die Isolationsschicht mittels ADM-Verfahren (Aerosol-Deposition-Method) hergestellt. Mit Hilfe eines derartigen Verfahrens können keramische oder glasartige Isolationsschichten hergestellt werden. Diese Schichten weisen eine besonders hohe elektrische Isolation auf und können zusätzlich eine dünne Schichtdicke aufweisen. Sofern die Isolationsschicht mittels ADM-Verfahren hergestellt wird, kann die Isolationsschichtdicke 0,2 µm - 10 µm betragen.

Neben dem ADM-Verfahren sind auch andere bekannte Abscheideverfahren wie CVD (chemical vapor depostion) oder PVD (physical vapor deposition) zum Aufbringen einer Isolationsschicht auf eine Metallfolie möglich.

Es ist möglich, dass die Isolationsschicht
- eine Metalloxidschicht, insbesondere eine anodisierte Metalloxidschicht oder eine Metallnitridschicht oder eine Metalloxinitridschicht, ist,
   oder
- aus einem Schichtenverbund gebildet ist,
   oder
- eine glasartige oder glaskeramische Schicht, gebildet aus einem Schlicker oder einer Paste mit darin enthaltenen Metalloxiden, insbesondere Aluminiumoxidpartikel (Al₂O₃) und/oder Magnesiumoxidpartikel (MgO), aufweist,
   oder
- aus einem Schichtenverbund gebildet ist, wobei mindestens eine Schicht eine Polymerschicht aufweist.

Es ist möglich, die Auswahl des Materials der Isolationsschicht an die Auswahl hinsichtlich des Materiales für das Metallelement, insbesondere für die Metallfolie, anzupassen.

Die Verwendung einer Metallfolie zur Herstellung bzw. das Zur-Verfügung-stellen eines Substrates, insbesondere die Verwendung einer Aluminiumfolie, hat den Vorteil, dass ein Verzug der Metallfolie bei Beaufschlagung des herzustellenden Temperatursensors mit höheren Temperaturen verhindert wird.

Das Verwenden einer Metallfolie zur Ausbildung eines elektrisch leitenden Substrates hat weiterhin den Vorteil, dass beispielsweise im Gegensatz zur Verwendung von polymeren Substraten, die Isolationsschicht mittels variabler Verfahren aufgebracht werden kann.

Da die Metallfolie hohen Temperaturen ausgesetzt werden kann, kann die Isolationsschicht auch mittels derartiger Verfahren aufgebracht werden, die mit einer hohen Temperaturbeaufschlagung einhergehen. Dies ist beispielsweise beim Aufbringen metallhaltiger Pasten der Fall. Derartige Pasten bzw. Sinterpastenschichten sind regelmäßig bei hohen Temperaturen von beispielsweise 1.000 °C zu sintern. Aufgrund der Verwendung einer Metallfolie können derartige Temperaturbeaufschlagungen ohne weiteres erfolgen.

Eine anodisierte Metalloxidschicht unterscheidet sich von einer atmosphärischen Metalloxidschicht durch eine höhere elektrische Isolation. Eine anodisierte Metalloxidschicht kann beispielsweise mittels Eloxieren einer Metalloberfläche erzeugt werden. Mit anderen Worten kann eine Isolationsschicht, die eine anodisierte Metalloxidschicht ist, durch Eloxieren der Metalloberfläche des Substrates hergestellt werden. Aufgrund einer elektrolytischen Oxidation wird die Oberfläche der Metallfolie in eine Metalloxidschicht umgewandelt.

Bei einem Eloxal-Verfahren handelt es sich um eine Methode der Oberflächentechnik zum Erzeugen einer oxidischen Schutzschicht durch anodische Oxidation. Dabei wird im Gegensatz zu galvanischen Beschichtungsverfahren, die Schutzschicht nicht auf dem Werkstück niedergeschlagen, sondern durch Umwandlung der obersten Metallschicht ein Oxid bzw. Hydroxid gebildet. Es entsteht eine 5 µm - 25 µm dünne Schicht, die darunterliegende Schichten bzw. Elemente, nämlich das Substrat, schützt und isoliert.

Eine weitere Möglichkeit zur Herstellung einer Metalloxidschicht ist ein Hartanodisierungsverfahren. Dabei wird die Metallfolie wie beim Eloxal-Verfahren in einen Elektrolyten getaucht und als Anode geschaltet. Die Oberfläche der Metallfolie wird dabei oxidiert, so dass sich eine Metalloxidschicht ausbildet. In diesem Fall findet ein Volumenzuwachs an der Metallfolie statt.

Durch entsprechende Auswahl des Materials des elektrisch leitenden Substrates kann eine entsprechende Auswahl hinsichtlich der darauf auszubildenden Isolationsschicht erfolgen.

Bei der Verwendung einer Stahlfolie aus einer FeCrAl-Legierung kann eine Oxidation dieser Schicht an Luft bei erhöhter Temperatur ebenfalls eine Metalloxidschicht erzeugen.

Bei Verwendung einer FeCrAl-Legierung mit einem Aluminiumgehalt von beispielsweise 6% kann in Sauerstoffhaltiger Atmosphäre in einem Ofen bei Oxidationstemperaturen von 1.000 °C bis 1.100 °C eine elektrisch isolierende Isolationsschicht, insbesondere eine elektrisch isolierende Aluminiumoxid-Schicht, von bis zu 5 µm hergestellt werden.

In einer weiteren Ausführungsform der Erfindung ist es möglich, dass auch Stahlmaterialien mit einem geringen CrAl-Anteil verwendet werden, sofern ein derartiges Stahlmaterial auf mindestens einer Oberfläche bzw. auf mindestens einer Seite alitiert wird. Ein Alitierungsprozess sieht vor, dass eine aluminiumhaltige Schicht auf dem Substrat-Material aufgebracht wird, wobei diese aluminiumhaltige Schicht anschließend bei Temperaturen von 800 °C bis 1.200 °C geglüht wird. Es entstehen dabei dichte Al₂O₃-Schichten mit einer Dicke von > 20 µm. Die Al₂O₃-Schicht liegt dabei in der α-Phase vor. Aufgrund dieses Prozesses wird auf mindestens einer Seite des Substrates eine Isolationsschicht ausgebildet. Bei einer derartigen Isolationsschicht handelt es sich um eine elektrisch isolierende Metalloxidschicht.

Die Isolationsschicht kann des Weiteren aus einer glasartigen Verbindung hergestellt werden. Hierzu werden Glas-Schlicker, die verschiedene fein aufgemahlene Metalloxide, insbesondere Aluminiumoxidpartikel und/oder Magnesiumoxidpartikel und/oder Titanoxidpartikel, enthalten verwendet.

Ebenso ist es möglich, dass die Isolationsschicht aus einem Schichtenverbund gebildet ist. Mit anderen Worten kann die Isolationsschicht einen Multischichtaufbau aufweisen. Ein derartiger Schichtverbund bzw. ein Multischichtaufbau hat den Vorteil, dass Pin-Holes oder andere Störungen und/oder Defekte in einer ersten Schicht des Schichtverbundes durch das Aufbringen weiterer Schichten abgedeckt werden und aufgrund dessen die Kurzschlusswahrscheinlichkeit zwischen der Sensorstruktur und dem leitfähigen Substrat sinkt.

Sofern der erfindungsgemäße Temperatursensor bei Temperaturen von weniger als 260 °C eingesetzt werden soll, kann der Schichtverbund auch die Kombination von anorganischen Schichten mit Polymerschichten aufweisen. Sofern die Isolationsschicht aus einem Schichtverbund mit einer Polymerschicht gebildet ist, können insbesondere derartige Polymerschichten ausgebildet sein, die aus Lösung abscheidbare Materialien aufweisen. Beispielsweise handelt es sich bei der Polymerschicht um eine Schicht aus Polyimid und/oder Teflon und/oder Polykarbonat.

In einer besonders bevorzugten Ausführungsform der Erfindung kann der Schichtenverbund aus drei Schichten gebildet sein. Eine erste Schicht ist eine Aluminiumoxid(Al₂O₃)-Schicht. Vorzugsweise ist diese Schicht mittels ADM-Verfahren hergestellt. Bei der zweiten Schicht kann es sich um eine Polyimidschicht handeln. Bei der dritten Schicht handelt es sich vorzugsweise wiederum um eine Aluminiumoxid(Al₂O₃)-Schicht, die besonders bevorzugt mittels ADM-Verfahren hergestellt ist. Ein derartiger Schichtenverbund stellt eine besonders kurzschlussfeste Isolationsschicht zur Verfügung.

Unabhängig von der Ausführungsform der Isolationsschicht, bedeckt die Isolationsschicht das Substrat, insbesondere das elektrisch leitfähige Substrat, lediglich abschnittsweise. Mit anderen Worten ist das Substrat, insbesondere das elektrisch leitfähige Substrat, in wenigstens einem Abschnitt nicht mit der Isolationsschicht bedeckt und ist somit in diesem isolationsschichtfreien Abschnitt elektrisch kontaktierbar.

In einer weiteren Ausführungsform der Erfindung ist es möglich, dass der Temperatursensor ein zweites Kontaktpad aufweist, das insbesondere auf der Isolationsschicht ausgebildet ist. Das zweite Kontaktpad ist vorzugsweise mit dem ersten Kontaktpad elektronisch verbunden, wobei das zweite Kontaktpad vorzugsweise einen weiteren Abgriff eines Widerstandsnetzwerkes bildet.

Das erste Kontaktpad und/oder das zweite Kontaktpad bildet/bilden den Anschluss der Sensorstruktur mit einem Kontaktierungsabschnitt der Sensorstruktur, insbesondere mit dem zweiten Kontaktierungsabschnitt der Sensorstruktur. Sofern der erfindungsgemäße Temperatursensor ein komplexes Widerstandsnetzwerk aufweist, ist es notwendig, mehr als zwei Kontaktpads auf der Seite der Sensorstruktur auszubilden. Die Kontaktpads dienen sowohl als Kontaktierungsabschnitt für elektrische Zuleitungen als auch für entsprechende Abgriffe.

In einer Ausführungsform der Erfindung können zwei miteinander verbrückte Kontaktpads ausgebildet sein, so dass der Beitrag der elektrischen Zuleitung zum Gesamtwiderstand der Sensorstruktur erfasst werden kann.

Das erste Kontaktpad und/oder das zweite Kontaktpad kann beispielsweise ein Bondpad sein. Das mindestens eine Kontaktpad weist vorzugsweise ein sinterbares Material auf oder besteht aus einem derartigen sinterbaren Material. Das sinterbare Material kann Metall enthalten oder daraus bestehen. Das Metall kann vorzugsweise ausgebildet sein aus der Gruppe bestehend aus Edelmetallen oder Nicht-Edelmetallen.

Edelmetalle können ausgewählt sein aus der Gruppe bestehend aus Gold, Silber, Platin, Palladium oder Iridium.

Nicht-Edelmetalle können ausgewählt sein aus der Gruppe bestehend aus Aluminium, Kupfer oder Nickel.

Das Metall kann ein elementares Metall oder eine Legierung aufweisen oder daraus bestehen.

In einer bevorzugten Ausführungsform ist das Metall eine Legierung. Die Legierung kann ein Edelmetall enthalten, das ausgewählt ist aus der Gruppe bestehend aus Gold, Silber, Platin, Palladium oder Iridium. Bevorzugt enthält die Legierung zwei oder mehr Edelmetalle. Beispielsweise kann die Legierung eine Silberlegierung oder eine Silber-Platin-Legierung sein. In einer anderen Ausführungsform kann die Legierung mindestens ein Edelmetall und mindestens ein Nicht-Edelmetall aufweisen. Optional kann die Legierung sowohl Edelmetall als auch Nicht-Edelmetall aufweisen. Weiterhin ist es möglich, dass die Legierung Nicht-Metalle umfasst.

Die Fläche des mindestens einen Kontaktpads ist erfindungsgemäß nicht weiter beschränkt. In einer bevorzugten Ausführungsform weist das erste Kontaktpad und/oder das zweite Kontaktpad in einer ersten Richtung eine Dimension von nicht mehr als 1 mm, insbesondere nicht mehr als 200µm, und ganz besonders bevorzugt nicht mehr als 50µm, auf.

In einer weiteren Ausführungsform weist das erste Kontaktpad und/oder das zweite Kontaktpad in einer zur ersten Richtung senkrechten zweiten Richtung eine Dimension von nicht mehr als 300µm, insbesondere nicht mehr als 100µm, insbesondere nicht mehr als 5 mm, und ganz besonders bevorzugt von nicht mehr als 50µm, auf.

Die Form des ersten Kontaktpads und/oder des zweiten Kontaktpads ist nicht weiter beschränkt. Beispielsweise kann das erste Kontaktpad und/oder das zweite Kontaktpad rund oder eckig, insbesondere rechteckig, sein.

Die Sensorstruktur, insbesondere die resistive Sensorstruktur, kann insbesondere aus einem Metall gebildet sein. Vorzugsweise kann die Sensorstruktur, insbesondere die resistive Sensorstruktur, aus einem reinem Metall oder einer Metalllegierung bestehen. Insbesondere weist die Sensorstruktur ein Metall oder eine Metalllegierung auf, das/die einen Temperaturkoeffizienten >3E-3/K aufweist.

In einer besonders bevorzugten Ausführungsform der Erfindung weist die Sensorstruktur Platin und/oder Aluminium und/oder Nickel auf. In einer besonders bevorzugten Ausführungsform der Erfindung ist die Sensorstruktur, insbesondere die resistive Sensorstruktur, aus Platin und/oder einer Platinlegierung gebildet. Die mindestens eine Sensorstruktur ist abschnittsweise vorzugsweise direkt auf der Isolationsschicht aufgebracht. Mit anderen Worten ist die Sensorstruktur zumindest abschnittsweise direkt auf der vom Substrat weg weisenden Seite der Isolationsschicht aufgebracht. Bei einer derartigen Ausführungsform der Erfindung sind zwischen der Sensorstruktur und der vom Substrat weg weisenden Seite der Isolationsschicht keine weiteren Schichten ausgebildet.

Es sind aber auch Ausführungsformen möglich, in denen Haftvermittlerschichten, wie zum Beispiel aus den Materialien Titan/Titanoxid, Tantal/Tantaloxid oder Titannitid zwischen der Isolationsschicht und der Sensorstruktur liegen.

Die Sensorstruktur beschreibt ein derartig strukturiertes Element, das vorzugsweise aus Metall gebildet ist, das tatsächlich die Temperatur erfasst.

Die Sensorstruktur, die insbesondere aus einer Metallstruktur hergestellt ist, kann eine beliebige Form aufweisen. Beispielsweise ist das Ausbilden einer Sensorstruktur in quadratischer Form möglich. Auch das Ausbilden einer Sensorstruktur mit einer im Wesentlichen geraden Leitungsstruktur ist möglich.

Besonders bevorzugt weist die Sensorstruktur eine mäandrierende Form auf. Eine derartig mäandrierende Form kann beispielsweise aus einer zusammenhängenden, ineinander verwobenen und/oder ineinander geschachtelten und/oder ineinander greifenden, Leitungsstruktur gebildet sein. Die einzelnen Abschnitte, insbesondere die einzelnen Leitungsabschnitte, können relativ dünn ausgebildet sein.

Die Sensorstruktur, die insbesondere in einer mäandrierenden Form vorliegt, kann aufgrund der gebildeten Struktur eine relativ große Fläche des Temperatursensors bedecken. Dies ermöglicht eine schnelle Erfassung der zu detektierenden Temperatur.

Die Sensorstruktur kann aus einer strukturierten Metallfolie gebildet sein. Sofern eine derartige Ausführung hinsichtlich der Sensorstruktur vorliegt, kann die Sensorstruktur in einem separaten Prozess erzeugt und anschließend auf die Isolationsschicht aufgebracht werden.

Des Weiteren ist es möglich, dass die Sensorstruktur aus einer metallhaltigen Paste und/oder einer metallhaltigen Tinte hergestellt ist. Eine derartig metallhaltige Paste und/oder Tinte kann im Rahmen eines Aufdruckens, insbesondere im Rahmen eines Siebdruckverfahrens, auf der Isolationsschicht sowie auf dem isolationsschichtfreien Abschnitt der Vorderseite des Substrates aufgebracht werden.

In einer besonders bevorzugten Ausführungsform der Erfindung ist die Sensorstruktur aus einer edelmetallhaltigen Paste gebildet. Insbesondere kann es sich bei den Edelmetallen um Platin und/oder Silber und/oder Gold handeln.

In einer weiteren Ausführungsform der Erfindung handelt es sich bei der Sensorstruktur um eine mittels Dünnschichtmetallabscheidung hergestellte Metallstruktur.

Aufgrund der erfindungsgemäßen Ausbildung des Temperatursensors mit den erfindungsgemäß ausgebildeten Schichten sowie der Anordnung der Sensorstruktur kann ein im Vergleich zum Stand der Technik verbesserter Temperatursensor mit verringerter Fläche zur Verfügung gestellt werden.

Die Fläche des Temperatursensors ist vorzugsweise kleiner als 10 mm², besonders bevorzugt kleiner als 3 mm², besonders bevorzugt kleiner als 2 mm², ganz besonders bevorzugt kleiner als 1 mm². Die Fläche des Temperatursensors ist insbesondere bei einer Draufsicht auf den Temperatursensor zu erkennen.

In einer weiteren Ausführungsform der Erfindung kann die Sensorstruktur eine Trimmstrecke aufweisen. Die Trimmstrecke dient zur Einstellung eines bevorzugten Widerstandssollwertes der Sensorstruktur.

Mit Hilfe des erfindungsgemäßen Temperatursensors wird ein Temperatursensor zur Verfügung gestellt, der sich bei einer sehr kleinen Baugröße durch eine hohe Genauigkeit auszeichnet. Aufgrund der kleinen Bauform des Temperatursensors wird auch die Temperatursensormasse reduziert, so dass die Ansprechzeit des Temperatursensors entsprechend verringert ist. Mit anderen Worten spricht der Temperatursensor schneller auf Temperaturwechsel an.

Die Vorteile eines Temperatursensors gemäß erfindungsgemäßem Aufbau insbesondere mit einer Sensorstruktur aus Pt gegenüber einem NTC-Sensor sind die lineare Kennlinie über einen weiten Temperaturbereich, die Langzeit-Stabilität und die hohe Genauigkeit gemäß DIN IEC 60751.

Ein weiterer Aspekt der Erfindung betrifft ein Verfahren zur Herstellung eines erfindungsgemäßen Temperatursensors. Bezüglich einzelner Verfahrensaspekte wird zusätzlich auf die Erläuterungen im Zusammenhang mit dem erfindungsgemäßen Temperatursensor verwiesen. Im vorangegangenen Teil der Beschreibung sind bereits einzelne Aspekte hinsichtlich der Herstellung des Temperatursensors enthalten.

Das erfindungsgemäße Verfahren zur Herstellung eines Temperatursensors umfasst die Schritte:
a) Bereitstellen eines Substrats, das aus einem Metallelement gebildet ist und eine Vorderseite und eine Rückseite aufweist,
b) Ausbilden mindestens einer Isolationsschicht auf der Vorderseite des Substrates, derart, dass ein isolationsschichtfreier Abschnitt des Substrates ausgebildet wird.
c) Aufbringen einer Sensorstruktur, insbesondere einer resistiven Sensorstruktur, auf die Isolationsschicht und auf den isolationsfreien Abschnitt der Vorderseite des Substrates,
d) Aufbringen mindestens eines Kontaktpads.

Im Schritt b) wird die Isolationsschicht auf die Vorderseite des Substrates beispielsweise vollflächig aufgetragen und in einem weiteren Verfahrensschritt zumindest abschnittsweise entfernt, derart, dass der isolationsschichtfreie Abschnitt des Substrates ausgebildet wird. Es ist möglich, eine auf die Vorderseite des Substrates aufgebrachte Isolationsschicht beispielsweise mittels Laserablation und/oder Lift-Off und/oder mittels chemischen Ätzens und/oder mittels Plasma-Ätzens wieder zu entfernen.

Die tatsächliche Ausbildung des isolationsschichtfreien Abschnittes bzw. das tatsächlich anzuwendende Verfahren zur Herstellung eines isolationsschichtfreien Abschnittes hängt beispielsweise von der Zusammensetzung der Isolationsschicht ab sowie von dem Verfahren, wie die Isolationsschicht auf die Vorderseite des Substrates aufgebracht wird/wurde.

In einer weiteren Ausführungsform der Erfindung ist es möglich, dass die Isolationsschicht mittels eines Gasabscheideverfahrens und/oder eines Druckverfahrens und/oder eines Tauchverfahrens und/oder eines Sprühverfahrens, insbesondere mittels eines ADM-Verfahrens (Aerosol-Deposition-Method), auf die Vorderseite des Substrates aufgebracht wird.

Sofern die Isolationsschicht bereits strukturiert aufgebracht wird, wie dies beispielsweise mittels eines Druckverfahrens, insbesondere mittels eines Siebdruckverfahrens, ermöglicht wird, wird kein nachfolgender Verfahrensschritt zur abschnittsweisen Entfernung der Isolationsschicht benötigt.

Die Verwendung von Abschattungsmasken ermöglichen auch das strukturierte Aufbringen der Isolationsschicht auf der Vorderseite des Substrates.

Im Schritt c) kann zur Aufbringung der Sensorstruktur beispielsweise ein Dickschichtfilm durch Siebdruck auf die Isolationsschicht sowie auf den isolationsschichtfreien Abschnitt aufgebracht werden.

In einer weiteren Ausführungsform der Erfindung kann im Schritt c) zunächst die Sensorstruktur mittels PVD-Verfahren als homogene Metallschicht vorzugsweise ganzflächig, aufgebracht werden. Die Metallschicht kann anschließend mittels eines Laserstrukturierungsverfahrens oder fotolithographisch strukturiert werden.

Des Weiteren ist es möglich, dass ein Lift-Off-Prozess durchgeführt wird, um die Struktur zu erzeugen. Hierzu wird ein Fotolack auf die Isolationsschicht sowie auf den isolationsschichtfreien Abschnitt aufgebracht. Anschließend wird der Fotolack getrocknet und belichtet sowie anschließend entwickelt. Auf die derart erzeugte Fotolack-Struktur wird anschließend eine leitfähige Schicht aufgebracht. Es folgt eine Strukturierung der leitfähigen Schicht durch Auflösen der Fotolack-Struktur mit Hilfe eines Lösungsmittels. Hierbei wird die Metallisierung auf dem Fotolack entfernt und der auf der Oberfläche verbleibende Film entspricht wiederum dem Negativ der ursprünglichen Fotolack-Struktur.

Das im Schritt d) aufzubringende Kontaktpad kann in einer Ausführungsform der Erfindung auf die Isolationsschicht aufgebracht werden. Des Weiteren ist es möglich, dass das mindestens eine Kontaktpad zumindest indirekt auf die Isolationsschicht aufgebracht wird oder zumindest indirekt mit der Isolationsschicht verbunden wird.

In einer weiteren Ausführungsform des erfindungsgemäßen Verfahrens ist es vorgesehen, auf die Sensorstruktur zumindest abschnittsweise eine Passivierungsschicht aufzubringen.

Vorzugsweise wird auf die vollständige Oberseite der Sensorstruktur eine Passivierungsschicht aufgebracht. Das mindestens eine Kontaktpad ist dabei mindestens abschnittsweise mit einer Passivierungsschicht versehen. Des Weiteren ist es möglich, dass das Kontaktpad bzw. die Kontaktpads vollständig passivierungsschichtfrei ausgebildet sind. Dies ermöglicht es, die Kontaktpads entsprechend einfach elektrisch zu kontaktieren.

Das erfindungsgemäße Verfahren zur Herstellung eines erfindungsgemäßen Temperatursensors zeichnet sich durch eine besonders einfache Methodik und eine kostengünstige Durchführung aus.

In einer weiteren Ausführungsform der Erfindung werden die Schritte a) bis d) auf einem Substratband und/oder einem Substratträger durchgeführt. Mit anderen Worten werden die Schritte a) bis d) derart durchgeführt, dass eine Vielzahl von Temperatursensoren gemeinsam auf einem Substratband und/oder einem Substratträger hergestellt und anschließend vereinzelt werden.

Auf dem Substratband und/oder dem Substratträger werden die Formen von einzelnen Substraten eingebracht. Hierzu werden die Substrate an den Seiten vom Substratband und/oder dem Substratträger getrennt. An Ecken und/oder einzelnen Seitenabschnitten werden die Substrate nicht vom Substratband und/oder dem Substratträger gelöst bzw. getrennt, so dass die einzelnen Substrate weiterhin mit dem Substratband und/oder dem Substratträger verbunden sind. In dieser dann vorliegenden Form können die einzelnen Substrate weiterprozessiert werden, so dass die Schritte b) bis d) in gemeinsamen Verfahrensschritten durchgeführt werden können.

Abschließend erfolgt ein Trennen der einzelnen Substrate vom Substratband und/oder dem Substratträger.

In einer weiteren Ausführungsform der Erfindung wird eine erste Zuleitung des Temperatursensors mit der Rückseite des Substrates verbunden und eine zweite Zuleitung des Temperatursensors wird mit dem mindestens einen Kontaktpad verbunden.

Im Folgenden werden gemäß Ausführungsformen 1 bis 3 verschiedene erfindungsgemäße Temperatursensoren sowie verschiedene Verfahren zur Herstellung derartiger Temperatursensoren angegeben.

### Ausführungsform 1:

Das Substrat ist aus einem Nickelblech gebildet, wobei das Substrat eine Vorderseite und eine Rückseite aufweist. Das Substrat ist beidseitig vergoldet und weist eine Länge von 0,8 mm, eine Breite von 0,8 mm und eine Höhe von 100 µm auf. Auf der Vorderseite des Substrates ist eine Isolationsschicht aufgebracht. Hierzu ist eine Aluminiumoxid(Al₂O₃)-Schicht mittels ADM-Verfahren aufgebracht. Die Schichtdicke der Isolationsschicht beträgt 2 µm. Anschließend wird ein Abschnitt der Isolationsschicht, d. h. ein Abschnitt der Al₂O₃-Schicht, mittels Laserablation wieder entfernt, so dass beispielsweise ein Streifen von 0,1 mm x 0,8 mm des darunterliegenden goldbeschichteten Substrates, d. h. des goldbeschichteten Nickel-Bleches, freigelegt wird.

Anschließend wird auf die Isolationsschicht sowie auf den isolationsschichtfreien Abschnitt eine Platin-Schicht aufgebracht. Dies erfolgt mittels PVD-Verfahren. Es wird eine Platin-Schicht mit einer Schichtdicke von 200 nm aufgebracht. Durch Laserablation wird eine Sensorstruktur aus der Platin-Schicht herausgearbeitet. Dabei kann der mit dem Laser erzeugte Graben auch in die Al₂O₃-Schicht und/oder in den Bereich des freigelegten Nickelblechs eindringen. Die Sensorstruktur besteht aus einem ersten Kontaktierungsabschnitt, der auf dem isolationsschichtfreien Abschnitt der Vorderseite des Substrates ausgebildet ist, einem Mäander, einer Trimmstrecke und einem zweiten Kontaktierungsabschnitt. Der zweite Kontaktierungsabschnitt ist mit einem Kontaktpad verbunden. Der Mäander der Sensorstruktur ist wie folgt dimensioniert:
Der Abstand der Mäanderstege voneinander beträgt 20 µm. Die Stegbreite beträgt 20 µm. Die Steglänge beträgt 500 µm. Bei einer Mäander-Gesamtlänge von 3,81 mm beträgt der Gesamtwiderstand des Mäanders ca. 100 Ω. Der Mäander bedeckt eine Fläche von ca. 0,3 mm x 0,5 mm.

Die Trimmstrecke, die ebenfalls durch Laserablation aus der Platin-Schicht herausgearbeitet wird, hat eine ähnliche Abmessung. Die Gesamtfläche der Sensorstruktur beträgt 0,5 mm * 0,6 mm.

Anschließend wird die Sensorstruktur durch Entfernung einzelner Segmente der Trimmstrecke mit einem Laser auf den Widerstandssollwert eingestellt.

Dann wird ein Glas-Schlicker auf die gesamte Sensorstruktur mit Ausnahme des zweiten Kontaktierungsabschnittes aufgetragen und eingebrannt.

Auf die Passivierungsschicht wird anschließend ein erstes Kontaktpad aufgebracht, das mit dem zweiten Kontaktierungsabschnitt elektrisch verbunden ist.

Es wird eine erste elektrische Zuleitung aufgebracht, die mit der Rückseite des Substrates verbunden wird. Vorzugsweise wird die erste elektrische Zuleitung mittels Löten mit der Unterseite verbunden. Die zweite elektrische Zuleitung wird in Form eines Gold-Bonddrahtes zur Verfügung gestellt. Dieser Gold-Draht wird mit dem ersten Kontaktpad verbunden.

### Ausführungsform 2:

Das Substrat wird aus einem Kupfer-Blech gebildet. Auf der Vorderseite des Kupfer-Bleches wird eine Al₂O₃-Isolationsschicht aufgebracht. Die Al₂O₃-Schicht wird mittels ADM-Verfahren abgeschieden. Die Dicke der Isolationsschicht beträgt 20 µm.

Anschließend wird das Kupfer-Blech in einem Ofen bei 500 °C für eine Stunde unter Luftzufuhr ausgelagert. Unter der Al₂O₃-Isolationsschicht wird nach der Auslagerung keine zusätzliche Kupfer-Oxidation beobachtet.

### Ausführungsform 3:

Im Gegensatz zur Ausführungsform 2 wird auf das gereinigte Kupfer-Blech eine Glas-Schlickerschicht aufgebracht und eingebrannt. Die Schichtdicke beträgt ebenfalls ca. 20 µm. Anschließend wird das Kupfer-Blech in einem Ofen bei 500 °C für eine Stunde unter Luftzufuhr ausgelagert.

Bei den gleichen Auslagerungs-Bedingungen wie diese auch bei Ausführungsform 2 angewandt wurden, werden in Ausführungsform 3 kreisförmige Oxidationsflächen auf der Kupfer-Folie im abgedeckten Bereich gebildet. Derartige kreisförmige Oxidationsflächen deuten auf Pin-Holes in der Glasabdeckung hin.

In einem Vergleich der Ausführungsformen 2 und 3 werden somit die verbesserten Isolationseigenschaften einer mittels ADM-Verfahren hergestellten Isolationsschicht gegenüber einer Glas-Schlickerschicht sichtbar.

Nachfolgend wird die Erfindung anhand von Ausführungsbeispielen unter Bezug auf die beigefügten Zeichnungen näher erläutert.

In diesen zeigen:
- Fig. 1a - 1d: verschiedene Ansichten und Herstellungszwischenprodukte eines ersten erfindungsgemäßen Temperatursensors;
- Fig. 2a u. 2b: die Darstellung eines weiteren erfindungsgemäßen Temperatursensors; und
- Fig. 3: eine weitere Ausführungsform eines erfindungsgemäßen Temperatursensors.
Im Folgenden werden für gleiche und gleich wirkende Bauteile die gleichen Bezugszeichen verwendet.

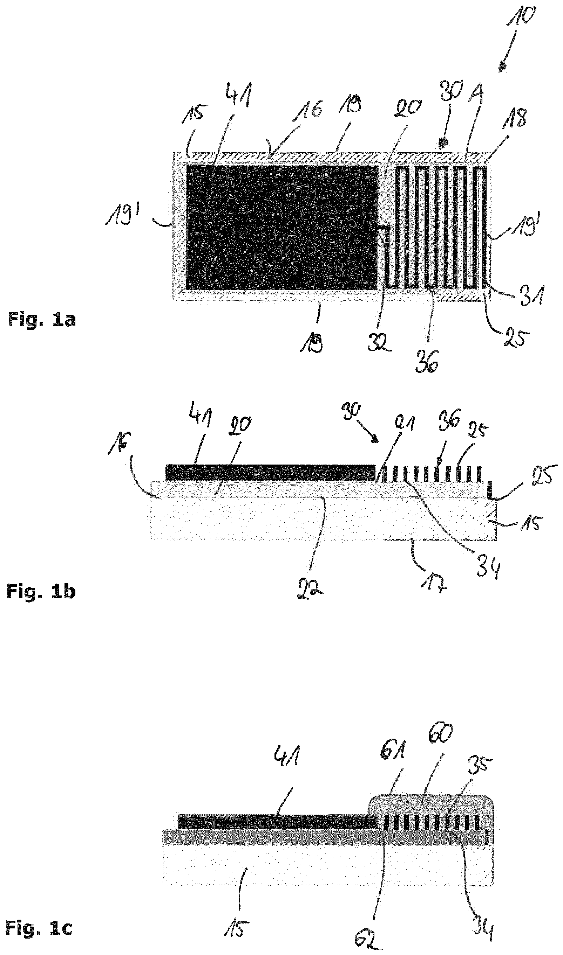

In Fig. 1a wird in einer Draufsicht eine Zwischenstufe eines herzustellenden Temperatursensors 10 dargestellt. Auf einem Substrat 15, das beispielsweise aus einer Metallfolie gebildet ist, wird auf die Vorderseite 16 eine Isolationsschicht 20 aufgebracht.

Wie in der Seitenansicht der Fig. 1b dargestellt ist, bedeckt die Isolationsschicht 20 die Vorderseite 16 des Substrates 15 nicht vollständig. Vielmehr ist ein isolationsschichtfreier Abschnitt 25 ausgebildet. Der isolationsschichtfreie Abschnitt 25 ist an einem Randabschnitt 18 der Vorderseite 16 des Substrates 15 ausgebildet.

Als Randabschnitt 18 ist ein derartiger Abschnitt der Vorderseite 16 des Substrates 15 zu verstehen, der an mindestens eine der dargestellten Seitenkanten 19 bzw. 19' des Substrates 15 angrenzt. Bei den Seitenkanten 19 handelt es sich um die langen Seitenkanten des Substrates 15. Die Seitenkanten 19' sind hingegen die kurzen Seitenkanten des rechteckförmigen Substrates 15.

Der isolationsschichtfreie Abschnitt 25 wird beispielsweise dadurch hergestellt, indem die Isolationsschicht 20 bereits strukturiert, d. h. in der zu erzielenden Endform auf die Vorderseite 16 des Substrates 15 aufgebracht wird. In einer weiteren Ausführungsform der Erfindung ist es möglich, zunächst die vollständige Vorderseite 16 mit einer Isolationsschicht 20 zu beschichten und den isolationsschichtfreien Abschnitt anschließend durch Entfernen eines entsprechenden Isolationsschicht-Abschnittes herzustellen.

Des Weiteren ist eine Sensorstruktur 30 zu erkennen. Die Sensorstruktur 30 weist einen Mäander-Abschnitt 36 auf. Die Sensorstruktur 30 umfasst des Weiteren einen ersten Kontaktierungsabschnitt 31 sowie einen zweiten Kontaktierungsabschnitt 32. Der erste Kontaktierungsabschnitt 31 ist mit dem isolationsschichtfreien Abschnitt 25 der Vorderseite 16 des Substrates 15 verbunden. Der zweite Kontaktierungsabschnitt 32 ist hingegen mit dem ersten Kontaktpad 41 verbunden. Das Kontaktpad 41 ist wiederum auf der Isolationsschicht 20 angeordnet.

Die Sensorstruktur 30 ist mit einer ersten Seite 34 auf der ersten Seite 21 der Isolationsschicht 20 sowie auf der Vorderseite 16 des Substrates 15 angeordnet. Die Isolationsschicht 20 ist wiederum mit der zweiten Seite 22 direkt auf dem Substrat 15 bzw. auf der Vorderseite 16 des Substrates 15 angeordnet.

Wie der Fig. 1c entnommen werden kann, kann die zweite Seite 35 der Sensorstruktur 30 bzw. die Seite 35 der Sensorstruktur 30, die vom Substrat 15 weg weist, mit einer Passivierungsschicht 60 beschichtet sein. Dies betrifft sowohl den Teil der Sensorstruktur 30, der den ersten Kontaktierungsabschnitt 31 umfasst, als auch den Abschnitt der Sensorstruktur 30, der den zweiten Kontaktierungsabschnitt 32 aufweist. Zumindest abschnittsweise ist auch das erste Kontaktpad 41 von der Passivierungsschicht 60 beschichtet.

Die Passivierungsschicht 60 weist im Wesentlichen eine erste Seite 61 sowie eine zweite Seite 62 auf. Bei der ersten Seite 61 der Passivierungsschicht 60 handelt es sich um die Seite, die von der Sensorstruktur 30 weg weist. Bei der zweiten Seite 62 der Passivierungsschicht handelt es sich um die Seite der Passivierungsschicht, die unter anderem auf dem isolationsschichtfreien Abschnitt 25 sowie auf der Isolationsschicht 20 aufliegt.

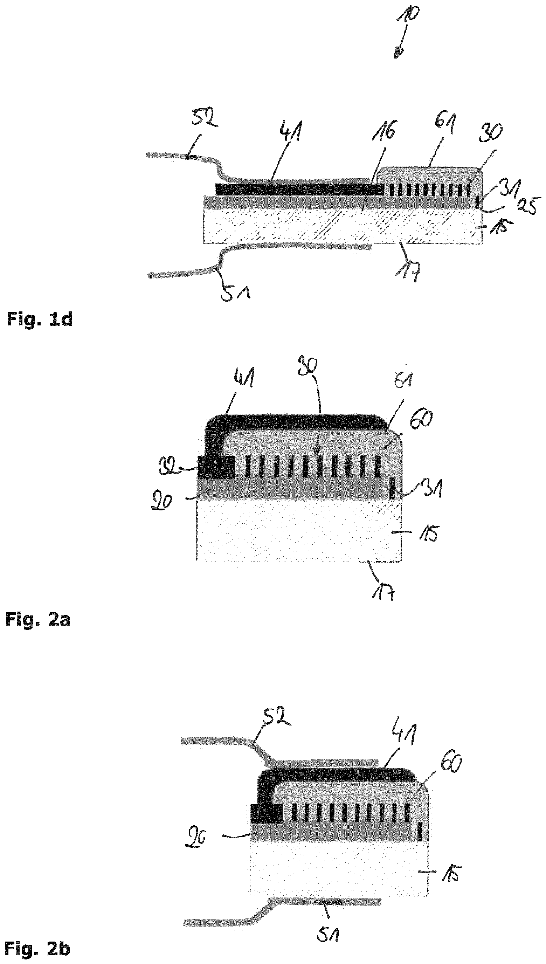

In Fig. 1d sind die Zuleitungen 51 und 52 des Temperatursensors 10 dargestellt.

Demnach weist der Temperatursensor 10 eine erste elektrische Zuleitung 51 auf, die mit der Rückseite 17 des Substrates 15 verbunden ist. Eine zweite elektrische Zuleitung 52 ist mit dem ersten Kontaktpad 51 verbunden.

Die elektrische Kontaktierung des Temperatursensors 10 erfolgt also zum einen über das erste Kontaktpad 41 und zum anderen über die Rückseite 17 des Substrates 15. Eine Kontaktierung der Rückseite 17 des Substrates 15 ist dadurch möglich, indem die Sensorstruktur 30 im ersten Kontaktierungsabschnitt 31 im isolationsschichtfreien Abschnitt 25 elektrisch mit der Vorderseite 16 des Substrates 15 verbunden ist.

Bei der Sensorstruktur 30 handelt es sich vorzugsweise um eine Platinstruktur. Diese Sensorstruktur 30 dient zur Temperaturerfassung. Ein wie in den Fig. 1a bis 1d dargestellter Temperatursensor 10 weist unter anderem aufgrund einer Platin-Sensorstruktur eine hohe Genauigkeit auf. Die kleinen Abmessungen des Temperatursensors 10 sind dadurch realisierbar, indem die elektrischen Kontaktierungen des Temperatursensors 10 auf den gegenüberliegenden Seiten des Temperatursensors, d. h. auf der Rückseite 17 des Substrates 15 sowie auf der Seite des Kontaktpads 41 erfolgen.
Es ist möglich, dass der Temperatursensor 10, wie dieser in Fig. 1d dargestellt ist, zusammen mit den Zuleitungen 51, 52 in einen Glas-Schlicker getaucht und gebrannt wird, so dass der Temperatursensor 10 vollständig verkapselt ist.

Die Fläche A des Temperatursensors 10 ist vorzugsweise kleiner als 10 mm², besonders bevorzugt kleiner als 1 mm². Die Fläche A des Temperatursensors 10 wird aufgrund der langen Seitenkante 19 und der kurzen Seitenkante 19' des Substrates 15 gebildet (siehe hierzu Fig. 1a).

In den Fig. 2a und 2b wird eine weitere Ausführungsform eines erfindungsgemäßen Temperatursensors 10 dargestellt. Eine derartige Ausführungsform erlaubt eine weitere Reduzierung der Sensorfläche. Der Aufbau entspricht im Wesentlichen dem Aufbau der Fig. 1a bis 1d.

Im Unterschied zu der Ausführungsform gemäß Fig. 1a bis 1d ist das erste Kontaktpad 41 derart angeordnet, dass dieses Kontaktpad 41 auf der von der Sensorstruktur 30 weg weisenden Seite 61 der Passivierungsschicht 60 zumindest teilweise aufliegt und gleichzeitig mit dem zweiten Kontaktierungsabschnitt 32, der nicht mit der Passivierungsschicht 60 bedeckt ist, elektrisch verbunden ist. Aufgrund einer derartigen Anordnung wird zusätzlich der Platz des Substrates 15 eingespart, der in Fig. 1a mit der Erstreckung des ersten Kontaktpads 41 einhergeht. Mit der in Fig. 2a dargestellten der Ausführungsform wird die Fläche des Temperatursensors weiter reduziert.

In Fig. 2b sind wiederum die Zuleitungen 51 und 52 dargestellt. Die erste Zuleitung 51 ist wiederum mit der Rückseite 17 des Substrates 15 verbunden. Die zweite elektrische Zuleitung 52 ist mit dem ersten Kontaktpad 41 verbunden.

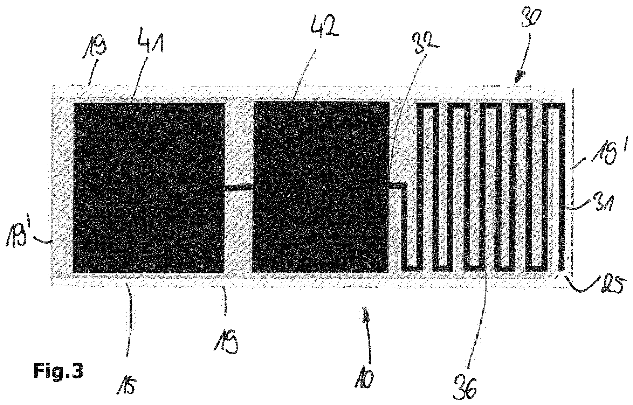

In Fig. 3 wird eine weitere Ausführungsform eines Temperatursensors 10 dargestellt. Der Aufbau entspricht im Wesentlichen dem in Fig. 1a dargestellten Aufbau eines Temperatursensors.

Zusätzlich ist ein zweites Kontaktpad 42 ausgebildet. Die Sensorstruktur 30 bzw. der zweite Kontaktierungsabschnitt 32 der Sensorstruktur ist indirekt mit dem ersten Kontaktpad 41 verbunden. Das zweite Kontaktpad 42 und das erste Kontaktpad 41 sind miteinander verbunden. Das zweite Kontaktpad 42 kann als Mittelabgriff für ein Widerstandsnetzwerk verwendet werden, um zum Beispiel stromlos ein Potenzial abzugreifen.

### Bezugszeichenliste

- 10: Temperatursensor
- 15: Substrat
- 16: Vorderseite Substrat
- 17: Rückseite Substrat
- 18: Randabschnitt
- 19, 19': Seitenkante
- 20: Isolationsschicht
- 21: erste Seite Isolationsschicht
- 22: zweite Seite Isolationsschicht
- 25: isolationsschichtfreier Abschnitt
- 30: Sensorstruktur
- 31: erster Kontaktierungsabschnitt
- 32: zweiter Kontaktierungsabschnitt
- 34: erste Seite Sensorstruktur
- 35: zweite Seite Sensorstruktur
- 36: Mäanderabschnitt
- 41: erstes Kontaktpad
- 42: zweites Kontaktpad
- 51: erste elektrische Zuleitung
- 52: zweite elektrische Zuleitung
- 60: Passivierungsschicht
- 61: erste Seite Passivierungsschicht
- 62: zweite Seite Passivierungsschicht
- A: Fläche Temperatursensor

## Patentansprüche

1. Temperatursensor (10) umfassend:
- ein Substrat (15), gebildet aus einem Metallelement, insbesondere einer Metallfolie, wobei das Substrat (15) eine Vorderseite (16) und eine Rückseite (17) aufweist,
- eine Isolationsschicht (20), die die Vorderseite (16) des Substrats (15) lediglich abschnittsweise bedeckt, derart, dass ein isolationsschichtfreier Abschnitt (25) auf der Vorderseite (16) des Substrats (15) gebildet ist, und
- eine Sensorstruktur (30), insbesondere eine resistive Sensorstruktur, die auf der Isolationsschicht (20) und auf dem isolationsschichtfreien Abschnitt (25) der Vorderseite (16) des Substrats (15) ausgebildet ist,
wobei die Sensorstruktur (30) mindestens zwei elektrische Kontaktierungsabschnitte (31, 32) aufweist, und ein erster Kontaktierungsabschnitt (31) mit dem isolationsschichtfreien Abschnitt (25) der Vorderseite (16) des Substrats (15) verbunden ist und ein zweiter Kontaktierungsabschnitt (32) ein erstes Kontaktpad (41) ist oder mit einem ersten Kontaktpad (41) verbunden ist, wobei das erste Kontaktpad (41) vorzugsweise auf der Isolationsschicht (20) angeordnet ist.

2. Temperatursensor (10) nach Anspruch 1,
**dadurch gekennzeichnet, dass**
der isolationsschichtfreie Abschnitt (25) an einem Randabschnitt (18) der Vorderseite (16) des Substrats (15) ausgebildet ist.

3. Temperatursensor (10) nach Anspruch 1 oder 2,
**dadurch gekennzeichnet, dass**
der Temperatursensor (10) eine erste elektrische Zuleitung (51) aufweist, die mit der Rückseite (17) des Substrats (15) verbunden ist und mindestens eine zweite elektrische Zuleitung (52) aufweist, die mit dem ersten Kontaktpad (41) verbunden ist.

4. Temperatursensor (10) nach einem der vorangegangenen Ansprüche,
**dadurch gekennzeichnet, dass**
auf der vom Substrat weg weisenden Seite (35) der Sensorstruktur (30) zumindest abschnittsweise eine Passivierungsschicht (60) ausgebildet ist.

5. Temperatursensor (10) nach Anspruch 4,
**dadurch gekennzeichnet, dass**
das erste Kontaktpad (41) derart angeordnet ist, insbesondere derart gebogen ist, dass dieses abschnittsweise auf der von der Sensorstruktur (30) weg weisenden Seite (61) der Passivierungsschicht (60) aufliegt.

6. Temperatursensor (10) nach einem der vorangegangenen Ansprüche,
**dadurch gekennzeichnet, dass**
das Metallelement, insbesondere die Metallfolie, aus Aluminium (AI) und/oder Stahl, insbesondere ferritischem Stahl, und/oder Titan (Ti) und/oder Niob (Nb) und/oder Tantal (Ta) und/oder Nickel (Ni) und/oder Kupfer (Cu) gebildet ist.

7. Temperatursensor (10) nach einem der vorangegangenen Ansprüche,
**dadurch gekennzeichnet, dass**
die Isolationsschicht (20) Aluminiumoxid (Al₂O₃) und/oder Aluminiumtitantat (Al₂TiO₅) und/oder Titandioxid (TiO₂) und/oder Siliziumdioxid (SiO₂) und/oder Siliziumoxid (SiO) und/oder Magnesiumoxid (MgO) und/oder Magnesiumtitanat (MgTiO₃) und/oder eine binäre Zirkondioxid-Legierung und/oder eine ternäre Zirkoniumdioxid-Legierung und/oder Bornitrid (BN) und/oder Aluminiumnitrid (AIN) und/oder Siliziumnitrid (Si₃N₄) aufweist.

8. Temperatursensor (10) nach einem der vorangegangenen Ansprüche,
**dadurch gekennzeichnet, dass**
die Isolationsschicht (20)
- eine Metalloxidschicht, insbesondere eine anodisierte Metalloxidschicht oder eine Metallnitridschicht oder eine Metalloxinitridschicht, ist,
oder
- aus einem Schichtenverbund gebildet ist,
oder
- eine glasartige oder glaskeramische Schicht, gebildet aus einem Schlicker oder einer Paste mit darin enthaltenen Metalloxiden, insbesondere Aluminiumoxidpartikel (Al₂O₃) und/oder Magnesiumoxidpartikel (MgO), aufweist,
oder
- aus einem Schichtenverbund gebildet ist, wobei mindestens eine Schicht eine Polymerschicht aufweist.

9. Temperatursensor (10) nach einem der vorangegangenen Ansprüche,
**gekennzeichnet durch**
ein zweites Kontaktpad (42), das insbesondere auf der Isolationsschicht (20) ausgebildet ist, wobei das zweite Kontaktpad (42) mit dem ersten Kontaktpad (41) elektronisch verbunden ist, wobei das zweite Kontaktpad (42) vorzugsweise einen weiteren Abgriff eines Widerstandsnetzwerkes bildet.

10. Temperatursensor (10) nach einem der vorangegangenen Ansprüche,
**dadurch gekennzeichnet, dass**
die Fläche (A) des Temperatursensors (10) kleiner ist als 10 mm², bevorzugt kleiner ist als 3 mm², besonders bevorzugt kleiner ist als 2 mm², ganz besonders bevorzugt kleiner ist als 1 mm².

11. Verfahren zur Herstellung eines Temperatursensors (10) nach einem der Ansprüche 1 bis 10,
umfassend die Schritte:
a) Bereitstellen eines Substrats (15), das aus einem Metallelement gebildet ist und eine Vorderseite (16) und eine Rückseite (17) aufweist,
b) Ausbilden mindestens einer Isolationsschicht (20) auf der Vorderseite (16) des Substrates (15), derart, dass ein isolationsschichtfreier Abschnitt (25) des Substrates (15) ausgebildet wird,
c) Aufbringen einer Sensorstruktur (30), insbesondere einer resistiven Sensorstruktur, auf die Isolationsschicht (20) und auf den isolationsfreien Abschnitt (25) der Vorderseite (16) des Substrates (15),
d) Aufbringen mindestens eines Kontaktpads (41, 42).

12. Verfahren nach Anspruch 11,
**dadurch gekennzeichnet, dass**
im Schritt b) die Isolationsschicht (20) auf die Vorderseite (16) des Substrates (15) vollflächig aufgetragen und in einem weiteren Verfahrensschritt zumindest abschnittsweise entfernt wird, derart, dass der isolationsschichtfreie Abschnitt (25) des Substrates (15) ausgebildet wird.

13. Verfahren nach Anspruch 11 oder 12,
**dadurch gekennzeichnet, dass**
im Schritt b) die Isolationsschicht (20) mittels eines Gasabscheideverfahrens, eines Druckverfahren, eines Tauchverfahren oder eines Sprühverfahrens, insbesondere mittels eines ADM-Verfahrens (Aerosol-Deposition-Method) aufgebracht wird.

14. Verfahren nach einem der Ansprüche 11 bis 13,
**dadurch gekennzeichnet, dass**
die Schritte a) - d) derart durchgeführt werden, dass eine Vielzahl von Temperatursensoren (10) gemeinsam auf einem Substratband und/oder einem Substratträger hergestellt und anschließend vereinzelt werden.

15. Verfahren nach einem der Ansprüche 11 bis 14,
**dadurch gekennzeichnet, dass**
eine erste Zuleitung (51) mit der Rückseite (17) des Substrats (15) verbunden wird und eine zweite Zuleitung (52) mit dem mindestens einem Kontaktaktpad (41, 42) verbunden wird.
